# EUROPÄISCHE PATENTSCHRIFT

(11) **EP 1 750 141 B1**
(45) Veröffentlichungstag und Bekanntmachung des Hinweises auf die Patenterteilung: **14.09.2011**
(21) Anmeldenummer: 06116636.9
(22) Anmeldetag: 05.07.2006
(51) Int. Cl.: G01S 7/40

(54) **Vorrichtung zum Simulieren eines beweglichen Radarziels**
Device for simulating a movable radar target
Dispositif destiné à la simulation d'une cible de radar mobile

(30) Priorität: 13.07.2005 DE 102005032649
(43) Veröffentlichungstag der Anmeldung: 07.02.2007
(73) Patentinhaber: Hella KGaA Hueck & Co., 59552 Lippstadt (DE)
(72) Erfinder: Wixforth, Thomas, 33330 Gütersloh (DE)

(56) Entgegenhaltungen:
- WO-A-2004/065918
- US-A- 2 683 855
- US-A- 3 142 059

## Beschreibung

### STAND DER TECHNIK

Die Erfindung betrifft eine Vorrichtung zum Simulieren eines Radarziels mit Relativgeschwindigkeit zu einem Radar.

In der Druckschrift mit der Veröffentlichungsnummer DE 103 47 414 A1 sind verschiedene Vorrichtungen der eingangs genannten Art aufgezählt. So gibt es neben elektronischen Vorrichtungen der eingangs genannten Art auch mechanische Lösungen zum Simulieren eines beweglichen Radarziels. Die in der Druckschrift genannte mechanische Lösung wird durch einen mechanischen Phasenverschieber realisiert. Der mechanische Phasenschieber kann zum Beispiel über ein in einem Hohlleiter drehendes Dielektrikum oder durch die Längenänderung einer Koaxialleitung mittels eines Stellmotors realisiert werden.

In der Kraftfahrzeugtechnik werden seit nunmehr geraumer Zeit im Außenbereich des Kraftfahrzeugs Radare eingesetzt, um den Abstand des Kraftfahrzeugs zu einem Hindernis oder einem weiteren fahrenden Kraftfahrzeug zu ermitteln. Auch wird zur Ermittlung der Relativgeschwindigkeit zu dem Hindernis oder dem weiteren fahrenden Kraftfahrzeug der Dopplereffekt genutzt. Derartige Radare müssen im Herstellungsbetrieb aber auch in dem Montagebetrieb des Kraftfahrzeugherstellers oder in Werkstätten überprüft und gegebenenfalls justiert unter anderem bezüglich der Winkelmessfähigkeit der Radare justiert werden. Dazu ist es notwendig, eine Vorrichtung der eingangs genannten Art zum Simulieren eines sich bewegenden Radarziels zu haben. Die bisher aus dem Stand der Technik bekannten Techniken zum Simulieren eines beweglichen Radarziels sind zwar grundsätzlich funktionsfähig, sie haben jedoch den Nachteil, dass sie in der Realisierung sehr aufwändig sind. Insbesondere das Einkoppeln von elektrischen Signalen oder die Überlagerung von elektromagnetischen Wellen durch eine aktive Sendeeinrichtung ist sehr aufwändig.

Aus der Patentschrift US 3,142,059 ist ein mechanischer Doppler-Simulator bekannt, der einen Rotor aufweist, der drehbar in einem Gehäuse eingesetzt ist. Der Rotor, der in jener Druckschrift als Stator bezeichnet wird, ist aus einer Walze gebildet. An der Walze sind radial auskragende Reflektorstäbe angebracht, die in einen durch das Gehäuse ausgebildeten Hohlleiter für elektromagnetische Wellen hineinragen und Reflektionen der elektromagnetischen Wellen hervorrufen, die von außen in den Hohlleiter eindringen. Das Gehäuse, welches den Hohlleiter bildet muss aus einem Material mit elektromagnetische Wellen reflektierenden Material hergestellt sein. Eine Herstellung aus einem absorbierenden Material kann ausgeschlossen werden, da das Gehäuse ansonsten nicht den Hohlleiter bilden könnte.

Ein weiterer mechanischer Doppler-Simulator ist aus der Patentschrift US 2,683,855 bekannt. Auch dieser Doppler-Simulator weist einen Rotor mit Reflektorstäbchen auf, dien in einen Hohlleiter hineinragen. In dem Hohlleiter sind in Laufrichtung der elektromagnetischen Wellen vor dem Rotor ein Dämpfungselement und ein Phasenschieber u. a. zur Polarisation angeordnet. Am Eingang des Hohlleiters ist eine Hornantenne angeordnet, mit welcher die elektromagnetische Welle in den Hohlleiter geleitet wird.

Der Aufbau beider aus dem Stand der Technik bekannten Doppler-Simulatoren mit Rotoren ist aufwändig. Dieses liegt u. a. daran, dass die Wellen, die den Reflektorstäben der Rotoren zugeleitet werden, innerhalb des Hohlleiters geformt werden. Dieses hat den Zweck wohldefinierte Bedingungen für die Reflektionen an den Reflektorstäben zu bewirken.

Für eine Vielzahl von Anwendungen ist es allerdings nicht notwendig, dass der technische Aufwand der bekannten Doppler-Simulatoren getrieben wird. Einfachere Doppler-Simulatoren sind für diese Anwendungen ausreichend.

Hier setzt die vorliegende Erfindung an.

### VORTEILE DER ERFINDUNG

Der vorliegenden Erfindung liegt die Aufgabe zugrunde, eine Vorrichtung zum Simulieren eines beweglichen Radarziels vorzuschlagen, die auf möglichst einfache Art und Weise realisierbar ist und möglichst eine mechanische Lösung darstellt.

Diese Aufgabe wird durch eine Vorrichtung zum Simulieren eines Radarziels mit Relativgeschwindigkeit zu dem Radar nach Anspruch 1 gelöst. Die Vorrichtung umfasst einen drehbar gelagerten Rotor zumindest teilweise aus einem elektromagnetische Radarwellen in einem Frequenzbereich zum Beispiel von 1 bis 79 GHz zumindest teilweise reflektierenden Material. Dieser Rotor ist in einem ersten Gehäuse aus einem zumindest teilweise elektromagnetische Radarwellen absorbierenden Material angeordnet. Das Gehäuse hat jedoch eine Ausnehmung, gewissermaßen ein Fenster, welche die Einstrahlung von Radarwellen einer ersten Richtung in dem angegebenen Frequenzbereich auf den Rotor ermöglicht. Die Ausnehmung in dem ersten Gehäuse ist rechteckig und hat eine Länge, die 5 bis 7 mal größer ist als die Breite der Ausnehmung. Die Ausdehnung des Rotors ist entlang der Rotationsachse 5 bis 7-mal größer als der Radius des Rotors.

Die Ausnehmung ist dabei so zu dem Rotor angeordnet, dass der bestrahlte Teil des Rotors im Falle einer Drehung nur eine Bewegung mit einer Geschwindigkeitskomponente mit einem positiven oder einem negativen Betrag in der ersten Richtung hat. Dies entspricht einer Ein-Seiten-Band-Modulation mit einer guten Seitenbandunterdrückung des Dopplereffektes auf die reflektierte Radarwelle. Das Fenster ist gewissermaßen so vorgesehen, dass nur die auf einer Seite der Rotationsachse liegende Hälfte des Rotors durch das Fenster für die elektromagnetische Radarwelle erkennbar ist. Die andere Hälfte des Rotors ist dagegen durch das Gehäuse aus dem absorbierenden Material abgeschattet.

Eine erfindungsgemäße Vorrichtung kann einen Rotor mit einer im Wesentlichen zylindrischen Form aufweisen.

Die Rotorblätter des Rotors können in Richtung der Rotationsachse gleichförmig ausgebildet sein. Die Querschnittsform der Rotorblätter ist vorzugsweise so zu wählen, dass eine möglichst vollständige Reflektion in die erste Richtung möglich ist. Als vorteilhaft haben sich Rotorblätter mit einem bogenförmigen Querschnitt und mit einem L-förmigen Querschnitt herausgestellt.

Die Vorrichtung kann neben dem ersten Gehäuse ein zweites, den Rotor vollständig umschließendes Gehäuse aufweisen, das aus einem für elektromagnetische Radarwellen durchlässige Material besteht. Das zweite Gehäuse kann das erste Gehäuse einschließen oder umgekehrt.

### ZEICHNUNGEN

Ein Ausführungsbeispiel für eine erfindungsgemäße Vorrichtung zum Simulieren eines Radarziels mit Relativgeschwindigkeit zu einem Radar ist anhand der Zeichnung näher beschrieben. Darin zeigt
- Fig. 1: eine Ansicht der Vorderseite der Vorrichtung und
- Fig. 2: eine Schnittansicht gemäß der Linie II-II in Fig. 1.

### BESCHREIBUNG DER AUSFÜHRUNGSBEISPIELE

Die erfindungsgemäße Vorrichtung 1 umfasst im Wesentlichen ein erstes Gehäuse 3, in dem drehbar ein Rotor 2 angeordnet ist. Der Rotor kann über einen nicht dargestellten Antrieb in Rotation versetzt werden.

Das Gehäuse 3 ist aus einem Radarwellen in einem Frequenzbereich von 1 bis 79 GHz absorbierenden Material hergestellt. Auf einer Vorderseite weist das Gehäuse jedoch eine rechteckige Ausnehmung 4 auf. Diese rechteckige Ausnehmung 4 erstreckt sich in etwa über die gesamte Höhe des Gehäuses 3 in der Querrichtung dazu jedoch nur um etwas weniger als die Hälfte der Gehäusebreite.

In einer Variante des Gehäuses, kann das Gehäuse zweiteilig aufgebaut sein. Ein erstes Gehäuse ist dann aus dem die Radarwellen absorbierenden Material aufgebaut, während ein zweites Gehäuse, welches das erste Gehäuse umgibt aus einem die elektrischen Wellen durchlassenden Material hergestellt ist.

Das erste Gehäuse kann dann aus einzelnen Elementen bestehen, die nicht tragend sind und untereinander auch nicht miteinander verbunden sind, sondern vielmehr auf der Innenseite des zweiten Gehäuses angebracht sind.

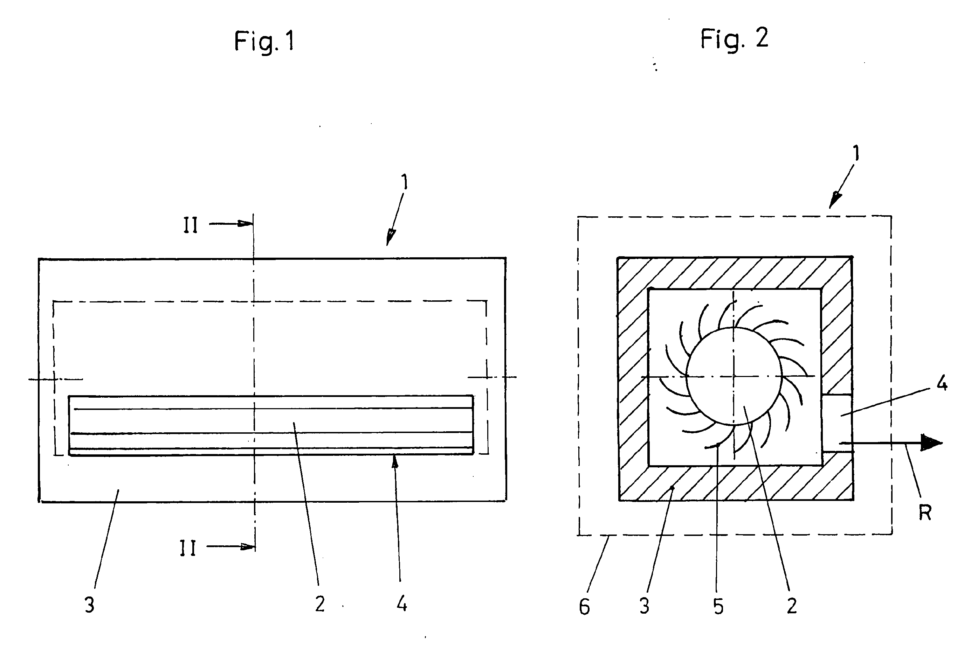

Dieses zweite Gehäuse ist in Fig. 2 gestrichelt dargestellt (Bezugszeichen 6).

In dem ersten Gehäuse ist der Rotor 2 drehbar angeordnet. Der Rotor ist mit seiner Hälfte durch die Ausnehmung 4 in dem ersten Gehäuse für Radarwellen erreichbar. In dem Bereich der Ausnehmung 4 werden die elektromagnetischen Radarwellen nicht absorbiert. Der Rotor ist aus einem die elektromagnetischen Radarwellen reflektieren Material hergestellt. Die in das erste Gehäuse 3 einfallenden elektromagnetischen Radarwellen können daher von dem Rotor 2 reflektiert werden. Sofern der Rotor steht, werden die Wellen mit der gleichen Frequenz zurückgeworfen, mit der sie in das erste Gehäuse 3 eingestrahlt werden. Rotiert der Rotor jedoch in die eine oder die andere Richtung um seine Rotationsachse, kommt es zu einer Dopplerverschiebung der Frequenz der reflektierten Welle. Aus der Dopplerverschiebung kann die Relativgeschwindigkeit des die Welle reflektierenden Rotors zu dem Radar berechnet werden.

Der Rotor 2 weist eine Vielzahl um den Umfang des Rotors 2 angeordnete Rotorblätter 5 auf. Diese Rotorblätter 5 sind in Richtung der Rotationsachse gleichförmig und in etwa im Querschnitt bogenförmig ausgebildet. Der Rotor 2 ist so in dem ersten Gehäuse angebracht, dass die elektromagnetischen Radarwellen auf die konvex geformte Wölbung der Rotorblätter auftreffen und von dieser konvex geformten Fläche der Rotorblätter 5 reflektiert wird.

## Patentansprüche

1. Vorrichtung zum Simulieren eines Radarziels mit Relativgeschwindigkeit zu einem Radar umfassend folgende Merkmale:
- die Vorrichtung (1) umfasst einen drehbar gelagerten Rotor (2), der zumindest teilweise aus eine elektromagnetische Radarwelle reflektierenden Material besteht;
- das erste Gehäuse (3) hat eine Ausnehmung (4), welche Radarwellen in einer ersten Richtung (R) auf den Rotor (2) ermöglicht, wobei die Ausnehmung so zum Rotor angeordnet ist, dass der bestrahlte Teil des Rotors (2) im Falle einer Drehung nur eine Bewegung mit einer Geschwindigkeitskomponente mit einem positiven oder einem negativen Betrag in der ersten Richtung (R) hat,
**dadurch gekennzeichnet** durch folgende Merkmale
- die Vorrichtung (1) umfasst ein erstes Gehäuse (3) zumindest teilweise aus einem elektromagnetische Radarwellen absorbierenden Material,
- die Ausdehnung des Rotors (2) entlang der Rotationsachse ist 5 bis 7-mal größer als der Radius des Rotors (2),
- die Ausnehmung (4) ist rechteckig,
- die Länge der Ausnehmung (4) ist 5 bis 7-mal größer als die Breite der Ausnehmung (4).

2. Vorrichtung nach Anspruch 1, **dadurch gekennzeichnet, dass** der Rotor (2) eine im Wesentlichen zylindrische Form hat.

3. Vorrichtung nach Anspruch 1 oder 2, **dadurch gekennzeichnet, dass** die Rotorblätter (5) des Rotors (2) in Richtung der Rotationsachse gleichförmig ausgebildet sind.

4. Vorrichtung nach einem der Ansprüche 1 bis 3, **dadurch gekennzeichnet, dass** die Rotorblätter (5) einen bogenförmigen Querschnitt haben.

5. Vorrichtung nach einem der Ansprüche 1 bis 3, **dadurch gekennzeichnet, dass** die Rotorblätter einen L-förmigen Querschnitt haben.

6. Vorrichtung nach einem der Ansprüche 1 bis 5, **dadurch gekennzeichnet, dass** die Vorrichtung (1) ein zweites den Rotor (2) vollständig umschließendes Gehäuse (6) aus einem für elektromagnetische Wellen in dem angegebenen Frequenzbereich durchlässigen Material umfasst.

## Claims

1. Device for the simulation of a radar target with relative speed to a radar comprising the following characteristics:
- The device (1) comprises a pivot-mounted rotor (2) which consists at least partly of a material reflecting electromagnetic radar waves;
- The first housing (3) has a recess (4) allowing radar waves in a first direction toward the rotor (2), wherein the recess is arranged relative to the rotor so that in case of a rotation, the irradiated part of the rotor (2) only has one movement with one speed component with a positive or a negative value in the first direction,
Therefore **characterized by** the following characteristics
- The device (1) comprises a first housing (3) which consist at least partly of a material absorbing electromagnetic radar waves,
- The extension of the rotor (2) along the rotational axis is 5 to 7 times larger than the radius of the rotor (2),
- The recess (4) is rectangular,
- The length of the recess (4) is 5 to 7 times larger than the width of the recess (4).

2. Device according to claim 1, **characterized in that** the rotor (2) has an essentially cylindrical shape.

3. Device according to claim 1 or 2, **characterized in that** the rotor blades (5) of the rotor (2) are homogeneously formed.

4. Device according to one of the claims 1 to 3, **characterized in that** the rotor blades (5) have a curved cross-section.

5. Device according to one of the claims 1 to 3, **characterized in that** the rotor blades (5) have an L-shaped cross-section.

6. Device according to one of the claims 1 to 5, **characterized in that** the device (1) comprises a second housing (6) completely enclosing the rotor (2) and made from a material transmissible for electromagnetic waves of the specified frequency range.

## Revendications

1. Dispositif pour simuler une cible radar à vitesse relative par rapport à un radar avec les caractéristiques suivantes :
- le dispositif (1) contient un rotor pivotant (2) qui consiste au moins partiellement en une matière réfléchissante les ondes radar électromagnétiques,
- le premier boîtier (3) présente un évidement (4) qui permet les ondes radar dans une première direction (R) sur le rotor (2), l'évidement étant disposé de telle manière par rapport au rotor que la partie irradiée du rotor (2) en cas d'une rotation n'ait qu'un mouvement avec un composant de vitesse à valeur positive ou négative dans la première direction (R),
**caractérisé par** les caractéristiques suivantes
- le dispositif (1) contient un premier boîtier (3) consistant au moins partiellement en une matière absorbante les ondes radar électromagnétiques,
- l'extension du rotor (2) le long de l'axe de rotation est 5 à 7 fois plus grande que le rayon du rotor (2),
- l'évidement (4) est rectangulaire,
- la longueur de l'évidement (4) est 5 à 7 fois plus grande que la largeur de l'évidement (4).

2. Dispositif selon la revendication 1, **caractérisé en ce que** la forme du rotor (2) est essentiellement cylindrique.

3. Dispositif selon la revendication 1 ou 2, **caractérisé en ce que** les pales (5) du rotor (2) sont uniformes en direction de l'axe de rotation.

4. Dispositif selon l'une des revendications 1 à 3, **caractérisé en ce que** la section des pales du rotor (5) est arquée.

5. Dispositif selon l'une des revendications 1 à 3, **caractérisé en ce que** la section des pales du rotor est en forme de L.

6. Dispositif selon l'une des revendications 1 à 5, **caractérisé en ce que** le dispositif (1) contient un deuxième boîtier (6) qui entoure complètement le rotor (2) et d'une matière transparente aux ondes électromagnétiques dans la plage de fréquence indiquée.
